(19) Europäisches Patentamt
European Patent Office
Office européen des brevets

(11) **EP 2 420 818 B1**

(12) **EUROPÄISCHE PATENTSCHRIFT**

(45) Veröffentlichungstag und Bekanntmachung des Hinweises auf die Patenterteilung:
**17.09.2014  Patentblatt 2014/38**

(51) Int Cl.:
*G01N 11/06* *(2006.01)*   *G01N 11/08* *(2006.01)*

(21) Anmeldenummer: **11172352.4**

(22) Anmeldetag: **01.07.2011**

(54) **Verfahren und Vorrichtung zur Ermittlung der Viskosität**

Method and device for determining viscosity

Procédé et dispositif destinés à la détermination d'une viscosité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2010  DE 102010039031**

(43) Veröffentlichungstag der Anmeldung:
**22.02.2012  Patentblatt 2012/08**

(73) Patentinhaber: **Krones AG**
**93073 Neutraubling (DE)**

(72) Erfinder: **Zacharias, Jörg**
**93096 Köfering (DE)**

(74) Vertreter: **Grünecker, Kinkeldey,**
**Stockmair & Schwanhäusser**
**Leopoldstrasse 4**
**80802 München (DE)**

(56) Entgegenhaltungen:
**WO-A2-02/39090       US-A- 3 520 179**
**US-A1- 2004 025 572**

**Beschreibung**

Die Erfindung betrifft ein Verfahren gemäß Oberbegriff des Patentanspruchs 1 sowie eine Vorrichtung gemäß Oberbegriff des Patentanspruchs 6.

Für die Verarbeitung von stückigen Füllgütern wie strukturviskosen Fluiden oder Stückchen, Fasern, Pulpen, Fruchtzellen, Partikeln oder dergleichen enthaltenden Getränken in der Getränke- und Lebensmittelindustrie, insbesondere bei der Verarbeitung in Abfüll-, Fruchtsaftbetriebs-, Molkerei- oder Brauerei-Prozessanlagen, ist für die rechnerische Auslegung von Prozessanlagenausstattungen wie beispielsweise Wärmetauschern, Füllern, Ventilen, und Rohrleitungssystemen die Bestimmung der Viskosität des zu verarbeitenden Fluids oder Getränks, auch unter Temperatureinfluss, von sehr wichtiger Bedeutung, beispielsweise auch um Strömungsformen und Verweilzeiten beurteilen zu können, sowie als Basis für numerische Simulationen und technischen Berechnungen oder als Grundlage zur Prozessanlagenauslegung. Üblicherweise werden zur Bestimmung der Viskosität von solchen, bezüglich der Bestimmung der absoluten Viskosität kritischen Fluiden oder Getränken Rheometer eingesetzt, bei denen die Bestimmung der Viskosität in Abhängigkeit von der Scherrate auf einen definierten Spalt im Messsystem angewiesen ist. Dies sind beispielsweise Systeme mit Platte/Platte oder Zylinder/Becher nach Searl oder Couette. Bei diesen Messsystemen können zu große Stückchen, Fasern etc. zu Verblockungen führen oder zur Stückchenscherung, woraus falsche/ungültige Messwerte entstehen. Durch das gegebenenfalls zu flüssige Milieu in den Fluiden oder Getränken ergeben sich auch häufig ungültige Messwerte insbesondere bei höheren Scherratenbereichen, beispielsweise durch zunehmende Turbulenzen im Messspalt, durch Strömungsablösungen oder Strömungsfronten mit Wirbeln oder Inhomogenitäten im Produkt, die eine zur Messung notwendige laminare Strömungsausbildung behindern. Bei größeren Scherraten kann es auch, besonders bei größeren Spaltabständen, welche bei größeren Partikeln notwendig werden, zur Spaltentleerung kommen. Bei niedrigeren Scherratenbereichen können hingegen in Spaltbereichen Wandgleiteffekte auftreten, die besonders bei größeren Scherspalten und Medien mit Fliessgrenzen zu falschen Wandschergeschwindigkeiten führen. Es entstehen so nicht korrekte Drehmomente im Rheometer. Diese führen zu ungültigen Messwerten.

Die Viskositäten der genannten Fluide und Getränke lassen sich mit auf einen Spalt angewiesenen Systemen jedoch bis heute nicht mit ausreichender Zuverlässigkeit und/oder schnell genug ermitteln.

Rohrrheometer mit geradem Messrohr, gewendeltem Messrohr oder hochgestelltem U-Messrohr und einer Pumpe sowie Stromregeleinrichtungen werden ferner für Anwendungsfälle beispielsweise für die Erdbohrtechnik diskutiert in EP 0 458 391 A, DE 10 2005 024 575 B4, US 5 315 863 A, DE 4111295 C2.

US-A-3 520 179 offenbart einen Rheometer zum präzisen Messen der Viskosität nicht-Newton'scher Flüssigkeiten. Der Rheometer enthält ein U-Rohr, von welchem ein Abschnitt als Kapillare ausgebildet ist, während der andere Teil als mit der Kapillare kommunizierendes Durchflussrohr ausgelegt ist. Das Gerät ist ausgelegt zur Messung mit einem Gravitätsstrom oder einem gepumpten Strom.

WO 02/39090 A2 offenbart ein Flüssigkeitsmessgerät mit einem U-Rohr, wobei der Querschenkel des U-Rohres einen Kapillarabschnitt enthält, der als Messblende fungiert. Das Überwachen einer oder zweier Fluidsäulen über die Zeit ermöglicht die Bestimmung der Fluidviskosität.

US 2004/025572 A1 offenbart zum Bestimmen der Viskosität einer Flüssigkeit durch Messen der Durchflussmenge über der Zeit ein horizontales, gerades Kapillarrohr, ausgehend vom Sumpf eines Speicherbehälters.

Der Erfindung liegt die Aufgabe zugrunde, ein Verfahren sowie eine zum Durchführen des Verfahrens geeignete, baulich einfache Vorrichtung anzugeben, mit denen die Viskosität solcher bisher bezüglich der Ermittlung der Viskosität kritischer Fluide und Getränke rasch und zuverlässig ermittelbar ist.

Die gestellte Aufgabe wird verfahrensgemäß mit den Merkmalen des Patentanspruchs 1 und vorrichtungsgemäß mit den Merkmalen des Patentanspruchs 6 gelöst.

Der Einsatz eines Rohrrheometers mit zumindest im Wesentlichen waagerechtem, geradem Messrohr mit einem Durchmesser über die Messrohr-Länge und die Messung der Druckverluste und Bestimmung des Fließindexes und des Konsistenzfaktors aus mindestens zwei unterschiedlichen, ausschließlich unter Gravitätseinfluss und zumindest weitgehend konstant eingestellten Volumenströmen ermöglicht überraschend die zuverlässige Bestimmung der Viskosität solcher hinsichtlich der Viskositätsbestimmung kritischer Fluide oder Getränke. Dabei lassen sich problemlos unterschiedliche Messbereiche durch auswechselbare Messrohre mit unterschiedlichen Durchmessern und/oder Längen abdecken, wobei jedoch zur Ausprägung der notwendigen Scherraten extrem konstante Fließgeschwindigkeiten der Volumenströme ausschließlich gravimetrisch, d.h. ohne eine Pumpe, eingestellt werden, wodurch eine akute Verfälschungsquelle beseitigt und unter anderem der Ausstattungs- und Regelaufwand minimiert werden. Das Verfahren ist äußerst flexibel für solche Fluide und Getränke einsetzbar, lässt sich automatisieren und somit online einbinden und ermöglicht auch die Beurteilung des Einflusses auf die Summenviskosität sowie auf den Einfluss von Schwarm- oder Bulkströmungen.

Die Vorrichtung ist baulich einfach und kommt ohne eine das Messergebnis verfälschende Pumpe aus, da die mindestens zwei Volumenströme ausschließlich unter Gravitätseinfluss konstant eingestellt werden. Der Dosierbehälter ist maßgeblich für eine gleichmäßige Fließgeschwindigkeit bei der Messung verantwortlich, so dass die Viskosität strukturviskoser, mit Stückchen oder dergleichen beladenen Fluide und Getränke unterschiedlicher Partikelkonzentrationen zuverlässig bestimmt werden kann. Die Vorrichtung ist an Prozessanlagen einsetzbar oder als mobiles Feldtestgerät und somit universell nutzbar. Die Vorrichtung lässt sich problemlos hygienisch einwandfrei ausführen und reinigen, und bei laufendem Prozess an einer Pro-zessanlage als Bypass oder Ablauf zu einem Gully installieren. Ferner ist die Vorrichtung auch für einen Technikum-Einsatz oder einen Laboreinsatz gleichermaßen geeignet.

Bei einer zweckmäßigen Verfahrensvariante wird die Viskosität mittels des Rohrrheometers anhand des Modells $\eta = K \cdot \gamma^{\dot{m}-1}$ nach Ostwald de Waele ermittelt. Mittels dieses Modells lassen sich bei Einstellen mindestens zweier unterschiedlicher Volumenströme der Konsistenzfaktor und der Fließindex anhand gemessener Druckverluste eindeutig bestimmen, mit denen die Viskosität berechnet wird.

Das Verfahren ist besonders zweckmäßig zur Viskositätsbestimmung von Fluiden oder Getränken mit Scherraten bis zu etwa 1000 1/s, wobei das Rohrrheometer auf diesen Scherratenbereich ausgelegt wird, beispielsweise unter Verwendung eines jeweils passenden von unterschiedlich dimensionierten Messrohren.

Besonders zweckmäßig wird verfahrensgemäß der jeweilige Volumenstrom mit wenigstens einem oberhalb des Rohrrheometers positionierten Dosierbehälter eingestellt und bei der Messung des Druckverlusts konstant gehalten, wobei während der Messung in dem Dosierbehälter ein vorbestimmter Füllstand aufrechterhalten wird. Das Verhältnis der Volumenströme kann bis zu etwa 1:3 oder mehr betragen, wobei, zweckmäßig, relativ kleine Volumenströme eingestellt werden, beispielsweise ein erster Volumenstrom von etwa 0,1 und ein weiterer Volumenstrom von etwa 0,3 m³/h. Die Volumenströme müssen im sinnvollen Messbereich des vorgesehenen Messrohres liegen.

Handhabungstechnisch einfach wird der Volumenstrom durch eine relative Höhenverstellung des Dosierbehälters und/oder dessen Füllstands gegenüber dem Messrohr eingestellt.

Einstellungen sind bequem durch visuelle Kontrollen des Verhaltens des Fluids oder Getränks im Dosierbehälter zu handhaben.

Bei einer zweckmäßigen Ausführungsform der Vorrichtung hat das für hohe Scherraten bis etwa 1000 1/s ausgelegte Messrohr ein Verhältnis L/R seiner Länge L zum Radius R des Innendurchmessers D größer als etwa 100. Für solche hinsichtlich der Viskositätsbestimmung kritische Fluide oder Getränke sollte der Radius R beispielsweise mindestens 5 mm betragen, für wasserähnliche, partikelbeladene Fluide eignet sich insbesondere ein Radius von etwa 10mm. Damit lassen sich Fluide und Getränke messen, die Partikel wie Pulpen in Größen von weit unter 1,0 mm enthalten, oder längliche Fasern mit Dimensionen von 1 x 1 x (3 über 5 über 10 bis hin zu 15 oder 20 mm) sowie beispielsweise Partikel aus Kokosnüssen, oder Imitate wie nata di coco, mit Abmessungen von 3 x 3 x 3 mm bis 5 x 5 x 5 / 6 x 6 x 6 mm bis gegebenenfalls zu Partikelgrößen von 10 x 10 x 10 mm enthalten. Für mit besonders großen Bestandteilen befrachtete Fluide oder Getränke können auch größere Durchmesser und/oder Längen des Messrohrs eingesetzt werden. Dabei ergibt sich der zweckmäßigste Innendurchmesser als Limitierung des Einsatzbereiches für die zulässige Größe von Partikeln in den dispersen Medien, bei denen ein Verhältnis D / PA von etwa 2 bis 5 zweckmäßig ist, zwischen dem Innendurchmesser D des Messrohres und einer charakteristischen Partikelabmessung PA. Dieser ist für gültige Messungen von der Gesamtrheologie abhängig und zu kontrollieren.

Zweckmäßig weist der Dosierbehälter zum Konstanthalten des Füllstandes bei einer Messung eine Füllstands-Einstellvorrichtung auf, und ist zum Verändern des Volumenstroms entweder die relative Höhenlage des Dosierbehälters und/oder des Füllstands im Dosierbehälter gegenüber dem Messrohr veränderbar. Alternativ und/oder additiv könnte das Messrohr in der Höhenlage verstellt werden.

Um die Viskosität unter gleichen oder weitestgehend ähnlichen Temperaturen bestimmen zu können, wie sie in der Prozessanlage an bestimmten Stellen herrschen, ist es zweckmäßig, wenn das Messrohr eine Beheizung aufweist, vorzugsweise in einem Heiz-Mantelrohr enthalten ist. Es könnte auch ein Heizmantel auf das Messrohr aufgebracht sein, oder das Heizrohr in einem Heizbad installiert werden.

Um im Dosierbehälter ein Dosiervolumen weitgehend strömungsberuhigt vorzuhalten, ist es zweckmäßig, wenn dem Dosierbehälter ein Vorlaufbehälter vorgeschaltet ist, aus dem der Dosierbehälter gespeist wird. Vorzugsweise ist das Volumen des Vorlaufbehälters deutlich größer als das Volumen des Dosierbehälters. Allerdings sollte Sorge getragen werden, dass zwischen dem Vorlaufbehälter und dem Dosierbehälter kein Strömungskurzschluss eintritt, sondern bei einem Messvorgang nur der konstante Füllstand im Dosierbehälter wirksam ist.

Zweckmäßig wird der Dosierbehälter, vorzugsweise zusammen mit dem Vorlaufbehälter, höhenverstellbar an einer Tragkonsole gehaltert.

Zweckmäßig sind ferner an dem Vorlaufbehälter und/oder dem Dosierbehälter und/oder im Bereich des Messrohrs Entlüftungseinrichtungen vorgesehen, um Messungen verfälschende Lufteinschlüsse vor einer Messung austreiben zu können.

Am Messrohr sind im Wesentlichen mit der Länge des Messrohrs beabstandete Druckmesssensoren angeordnet, vorzugsweise in vom Messrohr abzweigenden Druckmess-Rohrstutzen. Die Druckmesssensoren können entweder mit dem Fluid oder Getränk in Kontakt kommen, oder gegenüber diesem druckübertragend isoliert sein. Die von den Druckmesssensoren ermittelten Drücke werden zur Bestimmung des Druckverlusts entlang des Messrohrs ausgewertet. Um gleichmäßige Zu- und Abströmverhältnisse im Bereich des Messrohrs zu begünstigen, kann stromauf und/oder stromab des Messrohrs ein Siphon vorgesehen sein.

Zur Erleichterung einer visuellen Kontrolle des Verhaltens des Fluids oder Getränks im Vorlaufbehälter und/oder Dosierbehälter kann an diesen ein Schauglas vorgesehen sein, oder werden zumindest zur visuellen Kontrolle entscheidende Bereiche des oder der Behälter aus transparentem Material gefertigt.

Im Dosierbehälter und/oder im Vorlaufbehälter kann ein Rührer oder dergleichen angebracht sein, um ein Sedimentieren nicht homogener Flüssigkeiten zu verhindern.

Um in Anpassung an einen jeweils engeren Scherratenbereich sehr zuverlässige Messergebnisse rasch zu erzielen, ist es zweckmäßig, wenn das Messrohr austauschbar montiert ist und sich gegen ein anderes mit anderen Dimensionen ersetzen lässt.

Um den jeweiligen Volumenstrom durch das Messrohr nicht zu verfälschen oder nachteilig zu beeinflussen, kann es ferner zweckmäßig sein, eine Kommunikationsverbindung, wie einen flexiblen Schlauch, vom Dosierbehälter zum Messrohr und/oder, vorzugsweise, zumindest einen Siphon stromab des Messrohrs mit einem Innenquerschnitt auszubilden, der ein Mehrfaches des vom Innendurchmesser des Messrohrs definierten Innenquerschnitts entspricht. Auch für die übrigen Zu- und Ablaufleitungen zu den Behältern und zum Gully ist ein vergrößerter Leitungsdurchmesser zweckmäßig.

Der Vorrichtung kann eine computerisierte Auswerteeinrichtung zugeordnet sein, die die Messwerte zumindest der Druckmesssensoren auswertet, gegebenenfalls gleich die Viskosität errechnet, oder, falls die Auswerteeinrichtung online in eine Prozessanlagensteuerung eingebunden sein sollte, die Messwerte unausgewertet oder ausgewertet weitergibt.

Im Hinblick auf einen universellen Einsatzbereich der Vorrichtung ist es zweckmäßig, wenn die Vorrichtung entweder als mobile oder transportable Einheit beispielsweise als Bypass oder Ablauf zu einem Gully an einer Prozessanlage oder in einem Labor installiert ist, oder als fest installierte Einheit sozusagen Teil der Prozessanlage bildet, ebenfalls als Bypass oder Ablauf zu einem Gully.

Anhand der Zeichnung wird eine Ausführungsform des Erfindungsgegenstands erläutert. Es zeigen:

Fig. 1    eine schematische Seitenansicht einer Vorrichtung zum Bestimmen der Viskosität, und

Fig. 2    eine um 90° gedrehte Ansicht der Vorrichtung.

Die in den Fig. und 2 gezeigte Vorrichtung M dient zum Bestimmen der Viskosität von strukturviskosen Fluiden oder Stückchen, Fasern, Pulpen, Partikeln, Fruchtzellen, Cerealien, Schrot oder dergleichen enthaltenden Getränken, beispielsweise zur Verarbeitung in Abfüll-, Fruchtsaftbetriebs-, Molkerei- oder Brauerei-Prozessanlagen P, und zwar nach folgendem Verfahren.

In einem Rohrrheometer 1 mit einem zumindest im Wesentlichen waagrechten, geraden Messrohr 2 mit einem Durchmesser D über die Messrohr-Länge L werden zumindest zwei unterschiedliche Volumenströme $\dot{V}_1$, $\dot{V}_2$ mit weitestgehend konstanter Fließgeschwindigkeit eingestellt, und wird mittels Druckmesssensoren 5, 6 am Anfang und am Ende des Messrohrs 2 der jeweilige Druckunterschied $\Delta p$ über das Messrohr 2 gemessen. Der Fließindex m und der Konsistenzfaktor K werden zum Beispiel mit dem Modell $\eta = K \cdot \gamma^{m-1}$ ermittelt, wobei aus dieser Formel die Scherrate $\dot{\gamma}$ nach folgender Formel berechnet wird:

$$\dot{\gamma} = \frac{4 \cdot \dot{V}}{\pi \cdot R^3},$$

wobei auch die Formel herangezogen wird

$$\tau_W = \frac{\Delta p \cdot R}{2L}.$$

Für stark nicht-newtonsche Medien kann der Formalismus nach Rabinowitsch

$$\dot{\gamma}_{Rab} = 0,75 \cdot \dot{\gamma}_S + 0,25 \cdot \tau_W \cdot \frac{d\dot{\gamma}_S}{d\tau_W}$$

anstelle der oben benannten Scherraten-Berechnung verwendet werden.

Um den Fließindex m und den Konsistenzfaktor K bestimmen zu können, wobei, wie gesagt, die Druckverluste $\Delta p_{\dot{V}_1}, \Delta p_{\dot{V}_2}$ für die verschiedenen Volumenströme $\dot{V}_1$, $\dot{V}_2$ ermittelt werden, werden folgende Formeln herangezogen:

$$\dot{V}_1 = \left(\frac{m}{3m+1}\right) \cdot \frac{\pi \cdot D^3}{8} \cdot \left(\frac{D \cdot \Delta p_{\dot{V}_1}}{4 \cdot L \cdot K}\right)^{\frac{1}{m}} \qquad \dot{V}_2 = \left(\frac{m}{3m+1}\right) \cdot \frac{\pi \cdot D^3}{8} \cdot \left(\frac{D \cdot \Delta p_{\dot{V}_2}}{4 \cdot L \cdot K}\right)^{\frac{1}{m}}$$

Der Fließindex m lässt sich dann durch Gleichsetzen der Volumenströme $\dot{V}_1$, $\dot{V}_2$ wie folgt ermitteln:

$$\frac{\dot{V}_1}{\dot{V}_2}\left(\frac{\Delta p_{\dot{v}_1}}{\Delta p_{\dot{v}_2}}\right)^{\frac{1}{m}} \qquad m = \frac{In\left(\frac{\Delta p_{\dot{v}_1}}{\Delta p_{\dot{v}_2}}\right)}{In\left(\frac{\dot{V}_1}{\dot{V}_2}\right)}$$

Anschließend wird der Konsistenzfaktor K nach folgender Formel ermittelt:

$$K = \left(\frac{m}{3m+1}\right)^m \cdot \frac{\pi^m \cdot D^{3m+1} \cdot \Delta p_{\dot{v}_1}}{8^m \cdot \dot{V}_1^m \cdot 4 \cdot L}$$

Schließlich wird mit dem Modell nach Ostwald de Waele die Viskosität η berechnet.

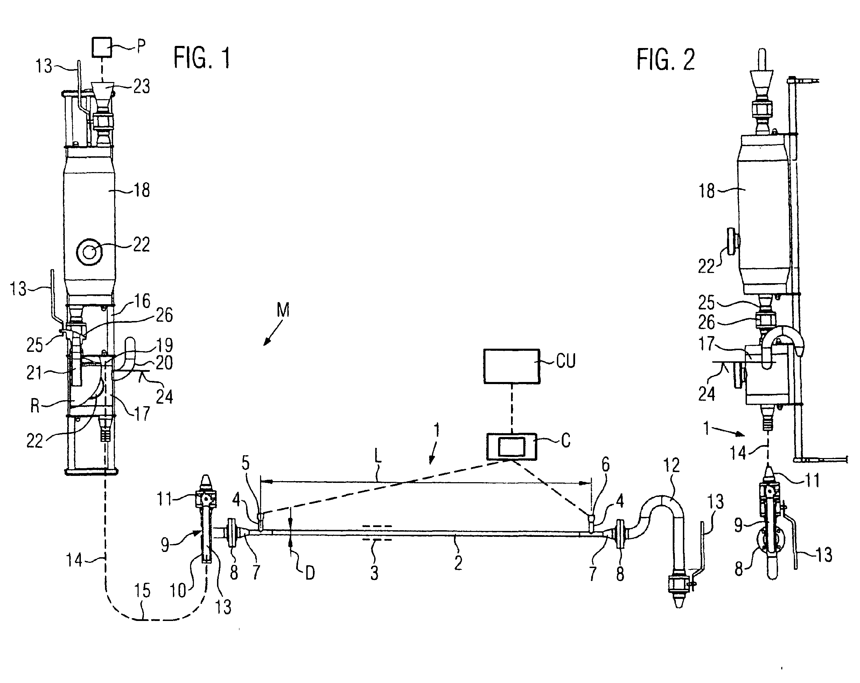

Die Vorrichtung M in den Fig. 1 und 2 ist so ausgebildet, dass an dem Messrohr 2 mit der Länge L und dem einen Innendurchmesser D = 2 R am Anfang und am Ende der Länge L je ein Messsensor-Rohrstutzen 4 abzweigt, in welchen Druckmesssensoren 5, 6 montiert sind, die, gestrichelt angedeutet, mit einer computerisierten Auswerteeinrichtung C verbunden sein können. Die Auswerteeinrichtung C kann entweder ein Display oder eine andere Darstelleinrichtung für den Druckverlust Δp oder gleich die errechnete Viskosität aufweisen, oder online z.B. in eine Prozessanlagen-Steuerung CU eingebunden sein.

Das Verhältnis UR beträgt beim Messrohr 2 vorzugsweise etwa 100. Das Rohrrheometer 1 ist zur Bestimmung der Viskosität von Fluiden oder Getränken mit Scherraten bis zu etwa 1000 1/s besonders gut geeignet. Beispielsweise beträgt der Innendurchmesser D 10 mm bei einer Länge L von etwa 1000 mm. Das Messrohr 2 ist zweckmäßig austauschbar installiert, so dass es gegen ein anderes mit anderen Dimensionen ersetzt werden kann. In der gezeigten Ausführungsform sind an beiden Enden des Messrohrs 2 konische Anschlussstutzen 7 vorgesehen, die in je einer Flanschverbindung 8 lösbar festgelegt sind.

Um das Fluid oder Getränk temperieren (aufheizen oder abkühlen) zu können, kann das Messrohr 2 in einem Mantelrohr 3 enthalten sein, in welchem ein Temperiermedium strömt. Alternativ könnte eine Heiz- oder Kühl-Ummantelung aufgebracht sein, oder könnte das Messrohr 2 in einem Temperierbad installiert sein.

An der Zulaufseite der Flanschverbindung 8 ist ein Anschlussteil 9 montiert, der eine obenliegende Entlüftungseinrichtung 11 beispielsweise mit einem Entlüftungsventil und einem Handhebel 13 aufweist, sowie einen untenliegenden Aufsteckanschluss 11 für eine Kommunikationsverbindung 14, beispielsweise einen flexiblen Schlauch, der zur Ausbildung eines Siphons 15 mit Überlänge installiert sein kann. An der Abströmseite schließt sich an das Messrohr 2 ein Siphon 12 zu einem Auslassventil an, das mittels eines Handhebels 13 betätigbar ist. Ist die Vorrichtung M als Bypass für eine Prozessanlage P ausgelegt, dann führt der Siphon 12 wieder zur Prozessanlage P zurück. Ist die Vorrichtung M hingegen als Ablauf zu einem Gully G konzipiert, dann wird das ablaufende Fluid oder Getränk in den Gully G abgelassen.

Zum Rohrrheometer 1 gehört in der gezeigten Ausführungsform ein Dosierbehälter 17, der oberhalb des Messrohrs 2 beispielsweise an einer Konsole 16 höhenverstellbar angeordnet ist. Bei der gezeigten Ausführungsform ist dem Dosierbehälter 17 ein Vorlaufbehälter 18 mit größerem Volumen als das Volumen des Dosierbehälters 17 vorgeschaltet, der über eine Einfüllvorrichtung mit einem durch einen Handhebel 13 betätigbaren Ventil befüllbar ist, beispielsweise aus der Prozessanlage P. Im Dosierbehälter 17 ist eine Füllstands-Einstelleinrichtung 19 enthalten, beispielsweise in funktioneller Kombination mit einem Überlauf 20. Vom Vorlaufbehälter 18 führt eine Überströmverbindung 25 zu einem Tauchrohr 21 und in den Dosierbehälter 17. Die Füllstands-Einstelleinrichtung 19 kann beispielsweise ein Standrohr umfassen, das in Zusammenwirkung mit dem Tauchrohr 21 und dem Überlauf 20 einen bestimmten Füllstand 24 (Fig. 2) im Dosierbehälter 17 einstellt und konstant hält, während das Fluid oder Getränk aus dem Vorlaufbehälter 18 zum Beispiel gluckernd nachläuft, jedoch ohne einen Strömungskurzschluss zuzulassen. In der Überströmverbindung 25 vom Vorlaufbehälter 18 zum Dosierbehälter 17 kann ein weiteres durch einen Handhebel 13 betätigbares oder im Durchflussquerschnitt einstellbares Ventil 26 enthalten sein. Ein integrierter Rührer R, als Option, kann zweckmäßig sein.

Der Dosierbehälter 17 ist so hoch über dem Messrohr 2 angeordnet, dass sich zwischen dem Füllstand 24 im Dosierbehälter 17 und dem Messrohr 2 eine bestimmte Höhendifferenz ergibt, die dazu dient, ausschließlich unter Gravitätseinfluss, das heißt gravimetrisch, den jeweils bestimmten Volumenstrom $\dot{V}_1$, $\dot{V}_2$ durch das Messrohr 2 einzustellen und konstant zu halten. Bei einer Messung verändert sich der Füllstand 24 nicht. Der Füllstand 24 wird mit Hilfe des Überlaufes 20 kontrolliert und stellt sich dort zum Beispiel an dessen Mündung in der Wand des Dosierbehälters 17 ein. Dies wird möglich, da eine entsprechende Strömungs-Entkoppelung zwischen dem Dosierbehälter 17 und dem Vorlaufbehälter 18 über eine gewählte Stellung des Handhebels 13 bzw. Ventils 26 in der Überströmverbindung 25 erfolgen kann. Um einen anderen Volumenstrom einzustellen, wird bei der gezeigten Ausführungsform der Dosierbehälter 17, vorzugsweise zusammen mit dem Vorlaufbehälter 18, an der Konsole 16 in der Höhe verstellt. Bei einer alternativen Ausführungsform könnte die Füllstands-Einstelleinrichtung 19, 20, 21 im Dosierbehälter 17 so ausgebildet sein, dass sich der Füllstand 24 in der Höhe verändern und in der neuen Einstellung wieder konstant halten lässt.

In der gezeigten Ausführungsform in den Fig. 1 und 2 weisen der Dosierbehälter 17 und/oder der Vorlaufbehälter 18 Schaugläser 22 auf. Alternativ könnten zumindest Bereiche der Behälter 17, 18 aus transparentem Material bestehen.

Vor Durchführung einer erstmaligen Messung werden zunächst alle Ventile geöffnet, um den Dosierbehälter 17 zu entlüften, wie auch die Kommunikationsverbindung 14 über die Entlüftungseinrichtung 11, und auch das Messrohr 2 über den Siphon 12. Sobald die Entlüftung abgeschlossen ist, und am Ende der Messstrecke und, aus dem Überlauf 20 gegebenenfalls das Fluid oder Getränk ohne Lufteinschlüsse austritt, wird bei geschlossener Entlüftungseinrichtung 11 ein Messvorgang durchgeführt und der Druckverlust $\Delta p$ für einen Volumenstrom $\dot{V}_1$ gemessen. Sobald ein stabiler Messwert erhalten wurde, wird der zweite unterschiedliche Volumenstrom $\dot{V}_2$ eingestellt, beispielsweise durch Höhenverstellen des Dosierbehälters 17, und wird eine zweite Messung des Druckverlustes $\Delta p$ vorgenommen. Die Viskosität wird dann, wie eingangs erläutert, bestimmt. Der jeweilige Volumenstrom $\dot{V}_1$, $\dot{V}_2$ kann durch Auslitern oder mittels eines sensitiven Durchflussmessers bestimmt werden.

Eine Messung des Druckverlusts benötigt zum Beispiel eine Probenmenge von nur etwa 5 bis 10 Litern.

Um die Vorrichtung M zu reinigen, wird der gesamte Strömungsweg durch die Vorrichtung mit einem Reinigungsmedium gespült. Zweckmäßig sind die einzelnen Komponenten der Vorrichtung M aus hygienisch einwandfreien Materialien gefertigt, beispielsweise unter hauptsächlicher Verwendung von Edelstahl. Die Kommunikationsverbindung 14 kann zum Fördern des Reinigungsmediums verwendet werden, und lässt sich dann gegebenenfalls abnehmen, um selbst gereinigt zu werden und auch die Steckanschlüsse reinigen zu können.

Das Messrohr 2 ist in einer nicht dargestellten Halterung fixiert, in der sich gegebenenfalls der Abstand zwischen den Flanschverbindungen 8 bei Austausch des Messrohrs 2 verändern lässt.

Die Vorrichtung M kann fest an einer Prozessanlage P installiert sein, wie gesagt entweder als Ablauf oder als Bypass, oder kann alternativ mobil oder transportabel sein und nur für Messungen installiert werden. Ferner ist die Vorrichtung M auch in Labors oder in anderen Einsatzbereichen nutzbar.

**Patentansprüche**

1. Verfahren zur Ermittlung der Viskosität ($\eta$) von strukturviskosen Fluiden oder Stückchen, Fasern, Pulpen, Fruchtzellen, Cerealien, Partikeln oder dergleichen enthaltenden Getränken, die zur Verarbeitung in Abfüll-, Fruchtsaftbetriebs-, Molkerei- oder Brauerei-Prozessanlagen (P) bestimmt sind, mittels eines Rheometers, **dadurch gekennzeichnet, dass** in einem Rohrrheometer (1) mit einem zumindest im Wesentlichen waagerechte, geraden Messrohr (2) mit einem Innendurchmesser (D) über die Messrohr-Länge (L) Druckverluste ($\Delta p$) eines ausschließlich gravi-

metrisch erzeugten Volumenstroms ($\dot{V}_1$, $\dot{V}_2$) gemessen und die Viskosität ($\eta$) durch Bestimmen des Fließindexes (m) und des Konsistenzfaktors (K) aus mindestens zwei unterschiedlichen jeweils ausschließlich gravimetrisch erzeugten, zumindest weitgehend konstant eingestellten Volumenströmen ($\dot{V}_1$, $\dot{V}_2$) ermittelt werden.

2. Verfahren nach Anspruch 1, **dadurch gekennzeichnet, dass** die Viskosität mittels des Rohrrheometers 1 anhand des Modells $\eta = K \cdot \gamma^{\dot{m}-1}$ nach Ostwald de Waele ermittelt wird.

3. Verfahren nach Anspruch 1, **dadurch gekennzeichnet, dass** das Rohrrheometer (1) auf Fluide oder Getränke mit Scherraten ($\dot{\gamma}$) bis zu etwa 1000 1/s ausgelegt wird.

4. Verfahren nach Anspruch 1, **dadurch gekennzeichnet, dass** der jeweilige Volumenstrom ($\dot{V}_1$, $\dot{V}_2$) mit teils einer vorbestimmten Probenmenge aus wenigstens einem oberhalb des Rohrrheometers (1) positionierten Dosierbehälter (17) eingestellt wird, und dass bei der Messung des Druckverlusts ($\Delta$p) ein vorbestimmter Füllstand (24) in dem Dosierbehälter (17) aufrechtgehalten wird.

5. Verfahren nach Anspruch 1, **dadurch gekennzeichnet, dass** die unterschiedlichen Volumenströme ($\dot{V}_1$, $\dot{V}_2$) durch eine relative Höhenverstellung des Dosierbehälters (17) und/oder dessen Füllstands (24) eingestellt werden.

6. Vorrichtung (M) zur Ermittlung der Viskosität von strukturviskosen Fluiden oder Stückchen, Fasern, Pulpen, Fruchtzellen, Cerealien, Partikeln oder dergleichen enthaltenden Getränken zur Verarbeitung in Abfüll-, Fruchtsaftbetriebs-, Molkerei- oder Brauerei-Prozessanlagen (P) mit einem Rheometer, **gekennzeichnet durch** ein Rohrrheometer (1) mit einem zumindest im Wesentlichen waagerechten, geraden Messrohr (2) mit einem Innendurchmesser (D) über die Messrohr-Länge (L), das mit wenigstens einem oberhalb des Messrohrs (2) angeordneten Dosierbehälter (17) zum ausschließlich gravimetrischen Einstellen zumindest zweier unterschiedlicher, jeweils weitgehend konstanter Volumenströme ($\dot{V}_1$, $\dot{V}_2$) **durch** das Messrohr (2) kommuniziert.

7. Vorrichtung nach Anspruch 6, **dadurch gekennzeichnet, dass** für hohe Scherraten ($\gamma$) bis etwa 1000 1/s das Messrohr (2) ein Verhältnis UR von der Länge (L) zum Radius (R) des Innendurchmessers (D) größer 100 aufweist, wobei, vorzugsweise, der Radius (R) mindestens 5,0 mm beträgt.

8. Vorrichtung nach Anspruch 6, **dadurch gekennzeichnet, dass** der Dosierbehälter (17) eine Füllstands-Einstellvorrichtung (19, 20, 21) aufweist, vorzugsweise einschließlich eines Überlaufs (20) zur Füllstandskontrolle, und dass zum Verändern des Volumenstroms ($\dot{V}_1$, $\dot{V}_2$) entweder die relative Höhe des Dosierbehälters (17) und/oder des Füllstands (24) im Dosierbehälter (17) gegenüber dem Messrohr (2) veränderbar ist.

9. Vorrichtung nach Anspruch 6, **dadurch gekennzeichnet, dass** das Messrohr (2) eine Beheizung aufweist, vorzugsweise in einem Heiz-Mantelrohr (3) untergebracht ist.

10. Vorrichtung nach Anspruch 6, **dadurch gekennzeichnet, dass** dem Dosierbehälter (17) ein Vorlaufbehälter (18) vorgeschaltet ist, vorzugsweise mit einem gegenüber dem Dosiervolumen im Dosierbehälter (17) größeren, vorzugsweise über ein Ventil (26) in einer Überstromverbindung (25) entkoppelbaren, Vorlaufvolumen.

11. Vorrichtung nach Anspruch 6, **dadurch gekennzeichnet, dass** der Dosierbehälter (17), vorzugsweise zusammen mit dem Vorlaufbehälter (18), höhenverstellbar an einer Tragkonsole (16) gehaltert ist, und, vorzugsweise ein Rührer (R) vorgesehen ist.

12. Vorrichtung nach Anspruch 6, **dadurch gekennzeichnet, dass** an dem Vorlaufbehälter (18) und/oder dem Dosierbehälter (17) und/oder im Bereich des Messrohrs (2) wenigstens eine Entlüftungseinrichtung (11) vorgesehen ist.

13. Vorrichtung nach Anspruch 6, **dadurch gekennzeichnet, dass** am Messrohr (2) im Wesentlichen mit der Länge (L) beabstandete Druckmess-Sensoren (5, 6) angeordnet sind, vorzugsweise in vom Messrohr (2) abzweigenden Druckmess-Rohrstutzen (4).

14. Vorrichtung nach wenigstens einem der vorhergehenden Ansprüche 6 bis 13, **dadurch gekennzeichnet, dass** die Vorrichtung (M) eine computerisierte Auswerteeinrichtung (C), vorzugsweise mit einer online-Einbindung in eine Prozessanlagensteuerung (CU), aufweist.

15. Vorrichtung nach wenigstens einem der vorhergehenden Ansprüche, **dadurch gekennzeichnet, dass** die Vorrich-

**EP 2 420 818 B1**

tung (M) als transportable oder fest installierte Einheit ausgebildet und an einer Prozessanlage (P) als Bypass der Prozessanlage (P) oder als Ablauf zu einem Gully (G) installierbar ist.

**Claims**

1. Method for determining the viscosity ($\eta$) of structurally viscous fluids or beverages containing small pieces, fibers, pulps, fruit cells, cereals, particles or the like, which are intended for being processed in filling, fruit juice preparation, dairy or brewery process plants (P), by means of a rheometer, **characterized in that** in a tube rheometer (1) with an at least essentially horizontal, straight meter tube (2) with an inner diameter (D) over the meter tube length (L), pressure losses ($\Delta p$) of an exclusively gravimetrically generated volume flow ($\dot{V}_1$, $\dot{V}_2$) are measured, and the viscosity ($\eta$) is determined by determining the flow index (m) and the consistency factor (K) of at least two different volume flows ($\dot{V}_1$, $\dot{V}_2$) generated each exclusively gravimetrically and adjusted to be largely constant.

2. Method according to claim 1, **characterized in that** viscosity is determined by means of $\eta = K \cdot \dot{\gamma}^{m-1}$ the tube rheometer 1 with the model by Ostwald de Waele.

3. Method according to claim 1, **characterized in that** the tube rheometer (1) is designed for fluids or beverages having shearing rates ($\dot{\gamma}$) of up to 1000 1/s.

4. Method according to claim 1, **characterized in that** the respective volume flow ($\dot{V}_1$, $\dot{V}_2$) is adjusted by means of a predetermined sample amount from at least one dosing tank (17) positioned above the tube rheometer (1), and that in the measurement of the pressure loss ($\Delta p$), a predetermined filling level (24) is maintained in the dosing tank (17).

5. Method according to claim 1, **characterized in that** the different volume flows ($\dot{V}_1$, $\dot{V}_2$) are adjusted by a relative height adjustment of the dosing tank (17) and/or the filling level (24) in the closing tank (17).

6. Device (M) for determining the viscosity of structurally viscous fluids or beverages containing small pieces, fibers, pulps, fruit cells, cereals, particles or the like, to be processed in filling, fruit juice preparation, dairy or brewery process plants (P) with a rheometer, **characterized by** a tube rheometer (1) with an at least essentially horizontal, straight meter tube (2) having an inner diameter (D) over the meter tube length (L) which meter tube (2) communicates with at least one dosing tank (17) arranged above the meter tube (2) for exclusively gravimetrically adjusting at least two different, each largely constant volume flows ($\dot{V}_1$, $\dot{V}_2$) through the meter tube (2).

7. Device according to claim 6, **characterized in that** for high shearing rates ($\gamma$) up to about 1000 1/s, the meter tube (2) has an UR ratio of the length (L) to the radius (R) of the inner diameter (D) of more than 100, where preferably the radius (R) is at least 5.0 mm.

8. Device according to claim 6, **characterized in that** the dosing tank (17) comprises a filling level adjustor (19, 20, 21), preferably including an overflow (20) for filling level control, and that for changing the volume flow ($\dot{V}_1$, $\dot{V}_2$), either the relative height of the dosing tank (17), and/or the filling level (24) in the dosing tank (17) can be changed with respect to the meter tube (2).

9. Device according to claim 6, **characterized in that** the meter tube (2) has a heating, preferably is accommodated in a heating jacket tube (3).

10. Device according to claim 6, **characterized in that** a presettling tank (18) is arranged upstream of the dosing tank (17), preferably with a presettling volume greater than the dosing volume in the dosing tank (17), preferably to be uncoupled from the closing tank (17) via a valve (26) arranged in an overflow connection (25).

11. Device according to claim 6, **characterized in that** the dosing tank (17) is held, preferably together with the presettling tank (18), at a supporting console (16) to be height adjustable, and that preferably an agitator (R) is provided in the closing tank (17).

12. Device according to claim 6, **characterized in that** at least one ventilating means (11) is provided at the presettling tank (18) and/or the dosing tank (17), and/or in the region of the meter tube (2).

13. Device according to claim 6, **characterized in that** pressure gauge sensors (5, 6) spaced apart at a distance corresponding to the length (L) are arranged at the meter tube (2), preferably in pressure gauge tube sockets (4) branching off from the meter tube (2).

14. Device according to at least one of the preceding claims 6 to 13, **characterized in that** the device (M) comprises a computerized evaluation assembly (C), preferably online-integrated into a process plant control system (CU).

15. Device according to at least one of the preceding claims, **characterized in that** the device (M) is configured as a transportable or permanently installed unit and can be installed at a process plant (P) as a bypass of the process plant (P) or as an outlet to a gully (G).

**Revendications**

1. Procédé pour déterminer, au moyen d'un rhéomètre, la viscosité ($\eta$) de fluides à viscosité structurelle ou de boissons renfermant des fragments, des fibres, des pulpes, des cellules de fruits, des céréales, des particules ou éléments similaires, qui sont destinés à être traités dans des installations de production (P) de remplissage, de fabrication de jus de fruits, de produits laitiers ou de brasserie, **caractérisé en ce que** dans un rhéomètre à tube (1) comprenant un tube de mesure (2) rectiligne, au moins sensiblement horizontal et d'un diamètre intérieur (D), on mesure des pertes de charge ou pertes de pression ($\Delta p$) sur la longueur (L) du tube de mesure, pour un écoulement ou débit volumique ($\dot{V}_1$, $\dot{V}_2$) engendré exclusivement par voie gravimétrique, et on détermine la viscosité ($\eta$) en établissant l'indice d'écoulement (m) et le facteur de consistance (K) à partir d'au moins deux écoulements ou débits volumiques ($\dot{V}_1$, $\dot{V}_2$) différents engendrés chacun exclusivement par voie gravimétrique et réglés constants au moins dans une large mesure.

2. Procédé selon la revendication 1, **caractérisé en ce que** l'on détermine la viscosité au moyen du rhéomètre à tube (1) au regard du modèle $\eta = K \cdot \dot{\gamma}^{m-1}$ selon la loi d'Ostwald de Waele.

3. Procédé selon la revendication 1, **caractérisé en ce que** le rhéomètre à tube (1) est dimensionné et conçu pour des fluides ou boissons avec des taux de cisaillement ($\dot{\gamma}$) jusqu'à environ 1000 1/s.

4. Procédé selon la revendication 1, **caractérisé en ce que** l'écoulement ou débit volumique ($\dot{V}_1$, $\dot{V}_2$) respectif est réglé en partie avec une quantité d'échantillon prédéterminée d'au moins un récipient de dosage (17) positionné au-dessus du rhéomètre à tube (1), et **en ce que** lors de la mesure de la perte de charge ou perte de pression ($\Delta p$), on maintient un niveau de remplissage (24) prédéterminé dans le récipient de dosage (17).

5. Procédé selon la revendication 1, **caractérisé en ce que** les écoulements ou débits volumiques ($\dot{V}_1$, $\dot{V}_2$) différents sont réglés par un déplacement en hauteur relatif du récipient de dosage (17) et/ou par son niveau de remplissage (24).

6. Dispositif (M) pour déterminer, au moyen d'un rhéomètre, la viscosité de fluides à viscosité structurelle ou de boissons renfermant des fragments, des fibres, des pulpes, des cellules de fruits, des céréales, des particules ou éléments similaires, qui sont destinés à être traités dans des installations de production (P) de remplissage, de fabrication de jus de fruits, de produits laitiers ou de brasserie, **caractérisé par** un rhéomètre à tube (1) comprenant un tube de mesure (2) rectiligne, au moins sensiblement horizontal et d'un diamètre intérieur (D) sur la longueur (L) du tube de mesure, qui communique avec au moins un récipient de dosage (17) agencé au-dessus du tube de mesure (2), en vue de régler exclusivement par voie gravimétrique, au moins deux écoulements ou débits volumiques ($\dot{V}_1$, $\dot{V}_2$) différents à travers le tube de mesure (2), chacun respectivement constant dans une large mesure.

7. Dispositif selon la revendication 6, **caractérisé en ce que** pour des taux de cisaillement ($\dot{\gamma}$) élevés allant jusqu'à 1000 1/s, le tube de mesure (2) présente un rapport L/R de la longueur (L) au rayon (R) du diamètre intérieur (D), supérieur à 100, le rayon (R) valant de préférence au moins 5,0 mm.

8. Dispositif selon la revendication 6, **caractérisé en ce que** le récipient de dosage (17) comprend un dispositif de réglage de niveau de remplissage (19, 20, 21), de préférence y compris d'un trop plein (20) pour le contrôle du niveau de remplissage, et **en ce que** pour faire varier l'écoulement ou le débit volumique ($\dot{V}_1$, $\dot{V}_2$), il est possible de faire varier la hauteur relative du récipient de dosage (17) et/ou du niveau de remplissage (24) dans le récipient de dosage (17), par rapport au tube de mesure (2).

**9.** Dispositif selon la revendication 6, **caractérisé en ce que** le tube de mesure (2) comporte un système de chauffage, de préférence logé dans un tube-enveloppe de chauffage (3).

**10.** Dispositif selon la revendication 6, **caractérisé en ce qu'**en amont du récipient de dosage (17) est monté un récipient de tête primaire (18), de préférence avec un volume primaire plus grand par rapport au volume de dosage dans le récipient de dosage (17), et pouvant de préférence être découplé par l'intermédiaire d'une vanne (26) dans une liaison de passage d'écoulement (25).

**11.** Dispositif selon la revendication 6, **caractérisé en ce que** le récipient de dosage (17) est supporté de manière réglable en hauteur, de préférence en commun avec le récipient de tête primaire (18), sur une console de support (16), et il est de préférence prévu un agitateur (R).

**12.** Dispositif selon la revendication 6, **caractérisé en ce que** sur le récipient de tête primaire (18) et/ou le récipient de dosage (17) et/ou dans la zone du tube de mesure (2), il est prévu au moins un système de purge d'air (11).

**13.** Dispositif selon la revendication 6, **caractérisé en ce que** sur le tube de mesure (2) sont agencés des capteurs de mesure de pression (5, 6) espacés sensiblement de la longueur (L), de préférence dans des embouts tubulaires (4) dérivés du tube de mesure (2).

**14.** Dispositif selon l'une au moins des revendications précédentes 6 à 13, **caractérisé en ce que** le dispositif (M) présente un système de traitement informatisé (C), de préférence avec une intégration en ligne dans une commande d'installation de production (CU).

**15.** Dispositif selon l'une au moins des revendications précédentes, **caractérisé en ce que** le dispositif (M) est réalisé en tant qu'unité transportable ou installée de manière fixe, et peut être installé dans une installation de production (P) en tant que dérivation de l'installation de production (P) ou en tant qu'écoulement vers une rigole d'égout (G).

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0458391 A
- DE 102005024575 B4
- US 5315863 A
- DE 4111295 C2
- US 3520179 A
- WO 0239090 A2
- US 2004025572 A1